# EUROPÄISCHE PATENTSCHRIFT

(11) **EP 1 709 935 B1**
(45) Veröffentlichungstag und Bekanntmachung des Hinweises auf die Patenterteilung: **12.01.2011**
(21) Anmeldenummer: 06005547.2
(22) Anmeldetag: 17.03.2006
(51) Int. Cl.: A61C 5/14, A61C 5/12

(54) **Kofferdamm und/oder Lippen- und Wangenexpander**
Rubber dam and/or lip and cheek expander
Digue dentaire ou/et extenseur de levres et de joues

(30) Priorität: 04.04.2005 DE 102005015406
(43) Veröffentlichungstag der Anmeldung: 11.10.2006
(73) Patentinhaber: Ivoclar Vivadent AG, 9494 Schaan (LI)
(72) Erfinder: Horvath, Domonkos Dr., 79798 Jestetten (DE)
(74) Vertreter: Baronetzky, Klaus

(56) Entgegenhaltungen:
- US-A- 3 396 468
- US-A- 4 889 490
- US-A- 5 011 409
- US-A1- 2004 072 126
- US-A1- 2004 097 795

## Beschreibung

Die Erfindung betrifft ein Abdeck- und Abhalteelement für die störungsfreie Vornahme dentaler Bearbeitungen an Zähnen, gemäß dem Oberbegriff von Anspruch 1 sowie ein entsprechendes Verfahren, gemäß dem Oberbegriff von Anspruch 15, das sich auf die Herstellung dieses Elements bezieht, und auch ein Anwendungsverfahren, gemäß den Oberbegriffen von Anspruch 20.

Derartige Abdeck- und Abhalteelemente sind seit längerem bekannt. Sie dienen dazu, dem Zahnarzt einen ausreichend ergonomischen Zugang zu den zu behandelnden Zähnen zu ermöglichen, aber auch die Zähne von Verunreinigungen bei operativen Maßnahmen, gegebenenfalls durch eigene Körperteile des Patienten zu schützen.

Zum Abhalten und Abdecken sind seit längerem verschiedene Elemente in Gebrauch. So können mit Klammern oder metallischen Instrumenten beispielsweise die Lippen und Wangen des Patienten von dem zu bearbeitendem Zahn abgehalten werden. Demgegenüber günstiger ist ein eine elastische Folie aufweisender Abhalter, wie er beispielsweise aus der WO 03/051185 A1 bekannt ist. Bei dieser Lösung sind zwei Spannelemente in Form von Spannringen vorgesehen, zwischen denen sich eine Folie erstreckt. Mit dieser Folie werden die Lippen des Patienten gespannt gehalten, so dass die Mundöffnung einen ausreichenden Platz für die Vornahme von dentalen Bearbeitungen bietet.

Ein ähnlicher Abhalter ist auch aus der DE 33 29 919 A1 bekannt. Bei dieser Lösung soll insbesondere für empfindliche Patienten ein Lippenschutz gewährleistet sein. Bei diesem Lippenschutz kann auch eine zusätzliche Einlage aus einem elastischen Material am Lippenkamm vorgesehen sein, die zusätzlich eine punktuelle Belastung der Lippen verhindert. Nachteilig hierbei ist jedoch, dass die Zähne selbst ungeschützt sind, sodass es insofern zu Verunreinigungen kommen kann.

Um insofern eine verbesserte Abdeckung zu bieten, ist es seit längerem bekannt, einen sogenannten Kofferdam einzusetzen, der im Unterschied zu einem Lippen- und Wangenexpander rückwärtig mit einer elastischen Folie geschlossen wird. Ausschließlich der zu behandelnde Zahn wird bei einem derartigen Kofferdam freigelegt, sodass der Rest des Mundraums geschützt ist.

Ein Beispiel hierfür ist aus der WO 98/034 559 ersichtlich. Bei einer derartigen Lösung ist eine Folie zur Ausbildung des Kofferdams vorgesehen, die über einen an sich bekannten Kofferdamrahmen extraoral aufgerollt gehalten ist. Zusätzlich ist vestibulär ein weiteres Spannelement vorgesehen, dass auch dort die Folie aufgespannt gehalten wird. Je nach Bedarf kann der Zahnarzt dann die Folie an einer beliebigen geeigneten Stelle aufschneiden und die erwünschte Behandlung an dem freigelegten Zahn oder der betreffenden Zahngruppe vornehmen.

Es versteht sich, dass die verwendete Folie durch die besondere Formgebung erheblichen Spannungen unterworfen ist. Zwar kann ein hochelastisches Material wie beispielsweise Latex für die Folie verwendet werden, sodass im Grunde nicht zu befürchten ist, dass die Folie reißt. Derartige Folien können beispielsweise um den Faktor 7 elastisch gedehnt werden.

Durch die Dehnung der Folie nimmt andererseits auch die je eingeleitete Kraft zu, und die Spannelemente für das Aufspannen des Kofferdams müssen in entsprechenderweise formstabil ausgebildet sein.

Andererseits wird eine vergleichsweise harte Ausgestaltung dieser Elemente vom Patienten häufig als unangenehm empfunden, gerade wenn der intraorale Spannring hart ist.

Eine gewisse Grössenanpassung an den Mund des Patienten lässt sich auch durch die aus der genannten Druckschrift bekannte Materialreserve vornehmen. Dort ist im Kofferdamrahmen das Folienmaterial aufgerollt. Der Zahnarzt kann es dort in Abschätzung der erforderlichen Grösse entsprechend abwickeln und dann die gewünschte Behandlung beginnen. Hierbei ist nachteilig, dass eine gewisse Erfahrung erforderlich ist, um die richtige Einstellung zu finden.

Dieses Problem ist seit langem bekannt, wobei beispielhaft auf die US-PS 3,406,452 zu verweisen ist, die bereits einen Kofferdamrahmen zeigt, wobei dort ein mit einer Schnalle verstellbares Band die Einstellung zumindest in groben Zügen ermöglicht.

Gemäß der US-PS 4,215,477 kann ein mit Stacheln bewehrter Kofferdamrahmen die Kofferdamfolie in geeigneter Weise unter Vorspannung halten. Andererseits sind die bislang bekannten Lösungen nicht zufriedenstellend; entweder ist die Folie zu stark gespannt, was aus verschiedenen Gründen nachteilig ist, oder es entstehen Falten in der Folie oder auch beides.

Die Druckschrift US 2004/0097795 A1 offenbart einen Lippen- und Wangenexpander aus einem intraoralen Spannrahmen, einem extraoralen Spannrahmen und einem folienartigen Mittel, dass die Spannrahmen verbindet. Das folienartige Mittel ist an seinen Endbereichen auf die Spannrahmen aufgerollt. Die Endbereiche sind unausrollbar. Durch den zusammengerollten Endbereich wird ein Polster geschaffen, welches die Gingiva vor Verletzungen nach Einsetzen des intraoralen Spannrahmens in das Vestibulum und die Haut um den Mund des Patienten nach Anlegen des extraoralen Spannrahmens schützt.

Die Druckschrift US 4,889,490 offenbart eine Zahnmaske mit einem Maskenrahmen und einer Schutzfolie. Der Maskenrahmen weist zwei Stützarme auf, die durch eine Querstrebe an ihrem unteren Ende miteinander verbunden sind. Im Einsatz drücken die Stützarme die Mundwinkel eines Patienten auseinander. Die Schutzfolie ist an der Außenseite des Maskenrahmens befestigt.

Die Druckschrift US 2004/0072126 A1 offenbart einen Kofferdam mit einem Folienkörper, einem extraoralen Spannelement und einem Befestigungselement. Das extraorale Spannelement umgibt den Folienkörper und wird um den Mund eines Patienten gelegt und der Folienkörper in den Mundraum eingeführt. Mit dem Befestigungselement wird der Folienkörper dann im Vestibulum des Patienten verspannt. Der Endbereich des Folienkörpers ist am extraoralen Spannelement besfestigt.

Die Druckschrift US 3,396,468 offenbart ein dentales Absauggerät zum Entfernen von Flüssigkeiten aus dem Mundraum eines Patienten. Das Absauggerät weist zwei U-förmige Elemente auf, die jeweils links und rechts um eine Zahnreihe am Oberkiefer und am Unterkiefer gelegt werden. Die U-förmigen Elemente können zum Verklemmen einer Folie dienen, die über die Zähne gestülpt ist. Durch die Steifigkeit der U-förmige Elemente werden die Kiefer auseinander gedrückt und der Mund des Patienten offen gehalten.

Die Druckschrift US 5,011,409 offenbart einen Kofferdam mit einem Spannrahmen und einem Folienkörper aus Polyurethan.

Demgegenüber liegt der Erfindung die Aufgabe zugrunde, ein Abdeck- und Abhalteelement gemäss dem Oberbegriff von Anspruch 1, ein entsprechendes Herstellverfahren gemäss dem Oberbegriff von Anspruch 16 sowie ein Anwendungsverfahren gemäss dem Oberbegriff von Anspruch 17 zu schaffen, die eine bessere Ergonomie für den behandelnden Zahnarzt ermöglichen, preisgünstig herzustellen sind, aber dennoch für den Patienten eine Erleichterung bei der Behandlung bieten.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass sich das erfindungsgemäße Abdeck- und Abhalteelement gleichsam automatisch und dreidimensional verformt und an die Mundform anpasst. Dies liegt an der erfindungsgemäß besonderen Kombination des Umschlagens, insbesondere von innen nach außen, und verschieblichen Lagerns des Folienkörpers gegenüber dem Spannelement, bevorzugt dem extraoralen Spannelement. Der elastische Folienkörper, der sich mit gewisser Vorspannung radial einwärts zusammenzieht, wird durch die Formgebung im Mund des Patienten verschoben, und zwar in unterschiedlichen Maße um den Umfang des Spannelements verteilt einen Folienkörper. Typischerweise bildet ein für die Behandlung geöffneter Mund die Form eines symmetrisch gebogenen Ovals, so dass der Folienkörper sich an den Stellen der größten Abweichung von der Kreisform ohne weiteres am stärksten verschieben kann. Erfindungsgemäß verläuft der Folienkörper beidseitig des betreffenden Spannelements, beispielsweise des extrakorporalen Spannelements, doppellagig nach einwärts zu den Lippen des Patienten hin, die den Folienkörper zusätzlich zu seiner Eigenspannung radial einwölben. Insofern bildet der den Lippen des Patienten anliegende Bereich des Abdeck- und Abhalteelements erfindungsgemäß einen Einschnürbereich, der ringförmig - wenn auch nicht kreisringförmig - verläuft.

Bei Ausgestaltung der erfindungsgemäßen Elements als Kofferdam ist der Folienkörper an seiner rückwärtigen Stirnseite geschlossen, während der Folienkörper bei Ausgestaltung als Lippen- und Wangenexpander am intraoralen Spannelement erneut von innen nach außen umgeschlagen ist.

Erfindungsgemäß bietet das Abdeck- und Abhalteelement in jeder Ausgestaltung überraschend eine ausreichende Wandspannung auch gegen einen Sauger, der bei der dentalen Bearbeitung eingesetzt wird. Durch die individuelle automatische Anpassung an die Mundform ergibt sich die Möglichkeit, einen relativ festen und damit stabilen Folienkörper zu verwenden, die unempfindlicher für die Wirkung des Saugers ist.

Erfindungsgemäß besteht eine automatische Folienreserve in dem umgeschlagenen Rand des Folienkörpers. Aus der Folienreserve kann der Folienkörper nachfliessen, wenn eine entsprechende Spannung ausgeübt wird, wobei sie aber auch automatisch nachgezogen wird, wenn ein Folienüberschuß besteht. Dies liegt in der Neigung des Folienkörper begründet, sich auch im umgeschlagenen Teil radial zusammenzuziehen.

Erfindungsgemäß überraschend ist es, dass sogar beim Öffnen und Schließen des Mundes ein Nachfließen automatisch erfolgen kann, wobei es sich versteht, dass für den Folienkörper bevorzugt eine recht gut gleitfähige Folie gewählt ist.

Als Material für die Folien kommt mit Talkumpuder versehenes oder talkumfreies Latex oder ein beliebiges geeignetes anderes Material in Betracht, beispielsweise auch Polyurethan, Polyethylen, Nitril, ein Elastomer oder ein anderer Kunststoff. Die Folie kann auch mehrschichtig ausgebildet sein, wobei sie bevorzugt auf ihrer nach außen gewandten Seite einen geringeren Reibungskoeffizienten aufweist während die radial einwärtige Seite besonders sauber ist.

Während hier eine Folie angesprochen ist, versteht es sich, dass ein beliebiges anderes geeignetes flächiges Abdeckmittel anstelle einer Folie auch verwendet werden kann, beispielsweise auch ein Gewebe, ein beschichtetes Gewebe, ein Vlies, ein beschichtetes Vlies oder beliebige andere geeignete Materialien, wobei es sich versteht, dass durch die erfindungsgemäße Maßnahme die Materialelastizität nicht mehr in so starkem Maße im Vordergrund stehen muß, wie es beim Stand der Technik der Fall war, da die automatische Anpassung des Materialfließens hier entscheidende Vorteile mit sich bringt.

Erfindungsgemäß besonders günstig ist es auch, dass der erfindungsgemäße Faltrand praktisch beide Spannelemente stabilisiert und trotz der insgesamt dreiteiligen Konstruktion dem erfindungsgemäßen Abdeckelement einen einteiligen Charakter verleiht.

In einer weiteren vorteilhaften Ausgestaltung ist es vorgesehen, eine andere Ausgangsform für den Folienkörper zu verwenden. Bei dieser Ausgestaltung weist der Folienkörper im Wesentlichen eine Kugelform auf. Diese Form hat den Vorteil, dass die Blasenbildung, wie sie bei Anlage zwischen ebenen Flächen entstehen kann, sicher vermieden wird. Aufgrund der erheblichen Elastizität des verwendeten Materials ist es unproblematisch, anstelle eines hülsenförmigen Abschnitts eine Kugelform zu verwenden.

In einer weiteren Ausführungsform ist lediglich die Stirnseite des Folienkörpers kugelkalottenförmig, während der hülsenförmige Abschnitt im Wesentlichen zylindrisch ist. Auch hierdurch lassen sich stirnseitige Luftblaseneinschlüsse sicher vermeiden.

In günstiger Ausgestaltung sind die erfindungsgemäßen Spannelemente als Ringe ausgebildet. Es versteht sich jedoch, dass anstelle dessen auch Spangen oder Spanndrähte die erwünschte Aufspannfunktion sicherstellen können, vorausgesetzt, es sind geeignete Maßnahmen gegen Verletzungen durch offene Enden getroffen.

Es versteht sich, dass für die Spannringe kreisförmige Ringe aus Kunststoff oder Metall verwendet werden können. Die Ringe können auch einen Kreisquerschnitt oder eine beliebige andere geeignete Querschnittsform haben, beispielsweise einen Durchmesser von bevorzugt etwa 2 mm. Auch können die Spannringe aus kunststoffbeschichteten Metalldrähten oder Federstahldrähten bestehen und es ist auch möglich, eine mindestens teilweise rauhe Oberfläche durch eine entsprechende Beschichtung oder andere Maßnahmen bereitzustellen, die die Reibung zwischen den Spannringen und der Folie erhöht.

In einer weiteren vorteilhaften Ausgestaltung ist es vorgesehen, dass die größte lichte Weite einer Öffnung, die der Folienkörper aufweist, größer ist als die kleinste lichte Weite des Folienkörpers.

In einer weiteren vorteilhaften Ausgestaltung ist es vorgesehen, dass der die Öffnung umgebende Rand des Folienkörpers die gleiche Wandstärke aufweist wie die Folie, die nach außen umgeschlagen, gerollt, verdickt oder in Form eines Kragens ausgebildet ist, und dass der Folienkörper unter Bildung eines Kofferdams rückwärtig geschlossen ist und das intraorale Spannelement radial von außen umgibt.

Erfindungsgemäß ist es vorgesehen, dass der Folienkörper durch die Spannelemente ringförmig aufgespannt ist und der freie Rand des umgeschlagenen Endes des Folienkörpers zwischen den Spannelementen zu liegen kommt, und dass der die Öffnung umgebende freie Rand des umgeschlagenen Endes des Folienkörpers die Folie zwischen den Spannelementen radial einschnürt.

In einer weiteren vorteilhaften Ausgestaltung ist es vorgesehen, dass die in einer parallel zur Mittellängsachse der Spannelemente erstreckende Länge des Einschnürbereiches durch Verschieben der Folie gegenüber einem Spannelement änderbar ist, und dass der Folienkörper eine zweite, der Öffnung gegenüberliegende Öffnung aufweist, das intraorale Spannelement teilweise durchsetzt und über dieses unter elastischer Aufweitung der zweiten Öffnung nach außen umgeschlagen ist.

In einer weiteren vorteilhaften Ausgestaltung ist es vorgesehen, dass die Spannelemente ringförmig ausgebildet sind und insbesondere das intraorale Spannelement einen um 2 % bis 20 %, insbesondere etwa 5 % bis 10 %, kleineren Durchmesser als das extraorale Spannelement aufweist, und dass der Folienkörper eine Wandstärke von 10 lm bis 2 mm hat und/oder dass der Folienkörper 10 um das 1,5- bis 7-fache seiner Originalgröße dehnbar ist.

In einer weiteren vorteilhaften Ausgestaltung ist es vorgesehen, dass die Spannelemente aus Federstahl, Kunststoff und/oder Glasfasern bestehen und insbesondere einen Querschnittsdurchmesser von 0,5 bis 5 mm aufweisen, dass mindestens ein Spannelement mindestens teilweise mit einem elastischen Material umhüllt ist, und dass der Folienkörper vorgestanzte und/oder vormarkierte und/oder perforierte Bereiche aufweist.

Erfindungsgemäß ist es vorgesehen, dass der Folienkörper wenigstens eine Öffnung aüfweist, durch die hindurch mindestens das extraorale Spannelement in den Folienkörper eingesetzt wird und an einer in der Nähe der Öffnung befindlichen Stelle positioniert wird und dass anschließend ein von der Öffnung beabstandeter Teil des Folienkörpers durch das erste Spannelement und die Öffnung durchgesteckt wird, so dass ein beutelförmiger Abschnitt entsteht.

In einer weiteren vorteilhaften Ausgestaltung ist es vorgesehen, dass, insbesondere in einem weiteren Verfahrensschritt, ein intraorales Spannelement durch den extraoralen Spannring und die Öffnung hindurch in den beutelförmigen Abschnitt eingesetzt wird und die Folie dort aufspannt, und dass das intraorale Spannelement einen kleineren Durchmesser aufweisen kann als das extraorale Spannelement.

In einer weiteren vorteilhaften Ausgestaltung ist es vorgesehen, dass der Folienkörper an dem extraoralen Spannelement von innen nach außen umgeschlagen ist und dass der umgeschlagene Teil des Folienkörpers den Folienkörper in einem Einschnürbereich, insbesondere zwischen den Spannelementen radial einwärts elastisch vorspannt.

Erfindungsgemäß ist es vorgesehen, dass ein im Wesentlichen kugel- oder hülsenförmiger Folienkörper mit zwei einander gegenüberliegenden Öffnungen vorbereitet wird, und sich je von innen nach außen über Spannelemente, insbesondere ein intraorales Spannelement und ein extraorales Spannelement, umgeschlagen wird, sodass die umgeschlagenen Abschnitte die Folie zwischen den Spannelementen radial einschnürt. Der Rand kommt damit außen zu liegen, und zwar im Einschnürbereich. Auch hier regelt sich der Folienkörpernmenge der Anatomie entsprechend selbst, wobei typischerweise im Unterlippenbereich ein größerer Folienbedarf als im Oberlippenbereich besteht, und die Mundwinkel deutlich mehr Folie benötigen als der Oberlippenbereich.

In einer weiteren vorteilhaften Ausgestaltung ist es vorgesehen, dass der Folienkörper mindestens gegenüber dem extraoralen Spannelements, an dem sie umgeschlagen ist, verschieblich ist und dass sich die Folie beim Aufbringen einer Zugkraft, wie sie beim Einsetzen in den Mund des Patienten auf die Folie wirkt, gegenüber dem extraoralen Spannelement mindestens einseitig verschiebt und insbesondere sich auch verformt.

In einer weiteren vorteilhaften Ausgestaltung ist es vorgesehen, dass die Länge des Einschnürbereichs auch einseitig änderbar ist, und dass der Folienkörper gegenüber dem extraoralen Spannelement, das insbesondere ringförmig ausgebildet ist, verschieblich und an diesem umgeschlagen ist, und dass der Folienkörper an dem extraoralen Spannelement nach außen umgeschlagen ist und insbesondere in einem gerollten oder verdicktem Rand endet.

In einer weiteren vorteilhaften Ausgestaltung ist es vorgesehen, dass die Folie am intraoralen Spannelement von innen nach außen umgeschlagen ist und so ein Lippen- oder Wangenexpander gebildet ist.

In einer weiteren vorteilhaften Ausgestaltung ist es vorgesehen, dass ein zweites Spannelement, insbesondere mit einem geringeren Durchmesser als das erste Spannelement, durch die Öffnung und das erste Spannelement zusammen mit dem zugehörigen Teil des Folienkörpers hindurchgesteckt wird, und dass das zweite Spannelement vor dem Hindurchstecken der Folie durch die Öffnung an die Folie angelegt wird.

In einer weiteren vorteilhaften Ausgestaltung ist es vorgesehen, dass das erste Spannelement das extraorale und das zweite Spannelement das intraorale Spannelement ist und dass insbesondere der Durchmesser des extraoralen Spannelements größer als der des intraoralen Spannelements ist.

In einer weiteren vorteilhaften Ausgestaltung ist es vorgesehen, dass der Folienkörper ringförmig vorbereitet wird, insbesondere bauchig oder hülsenförmig, und sich zwischen einer ersten und einer zweiten Öffnung erstreckt und dass Abschnitte des Foliekörpers nacheinander je von innen nach außen über Spannelemente, insbesondere ein intraorales Spannelement und ein extraorales Spannelement,umgeschlagen wird, so dass die umgeschlagenen Abschnitte den Folienkörper zwischen den Spannelementen radial einwärts vorspannen.

In einer weiteren vorteilhaften Ausgestaltung ist es vorgesehen, dass der Folienkörper zwischen den Spannelementen sich mindestens teilweise konisch, insbesondere nach der Art eines Doppelkonus, erstreckt.

Weitere Vorteile, Einzelheiten und Merkmale ergeben sich aus der nachstehenden Ausführungsform von mehreren Ausführungsbeispielen der Erfindung anhand der Zeichnung.

Es zeigen:
- Fig. 1: ein schematischer Schnitt durch einen erfindungsgemäßen Folienkörper zur Bildung eines Kofferdams als erste Aus- führungsform eines erfindungsgemäßen Abdeck- und Abhal- teelements;
- Fig. 2: eine Ansicht eines intraoralen Spannelements in schema- tisch perspektivischer Darstellung;
- Fig. 3: eine Ansicht eines extraoralen Spannelements in schema- tisch perspektivischer Darstellung;
- Fig. 4: ein fertig montiertes Abdeck- und Abhalteelement in sche- matisierter Form, teilweise aufgebrochen, unter Bildung eines Kofferdams;
- Fig. 5: der Kofferdam gemäß Fig. 4 bei asymmetrische Belastung;
- Fig. 6: eine Ausführungsform eines erfindungsgemäßen Kofferdams, nach Einsetzen in den Mund;
- Fig. 7: die Ansicht gemäß Fig. 6, jedoch von der Seite;
- Fig. 8A bis 8E: verschiedene Ausführungsformen des Randes des Folienkörpers für ein erfindungsgemäßes Abdeck- und Abhalteelement;
- Fig. 9: eine teilweise aufgeschnittene Seitenansicht eines erfindungsgemäßen Kofferdams in einer weiteren Aus- führungsform;
- Fig. 10: eine perspektivische Ansicht eines Details einer Aus- führungsform eines erfindungsgemäßen Spannelements;
- Fig. 11 bis Fig. 14: schematische Ansichten zur Darstellung einer möglichen Herstellung einer Ausführungsform eines erfin- dungsgemäßen Kofferdams;
- Fig. 15: eine Darstellung eines im Wesentlichen ringförmigen Folienkörpers für die Herstellung eines erfindungsgemä- ßen Lippen- und Wangenexpanders;
- Fig. 16: eine Darstellung eines im Wesentlichen ringförmigen Folienkörpers für die Herstellung eines erfindungsgemä- ßen Lippen- und Wangenexpanders in einer anderen Aus- führungsform;
- Fig. 17: eine teils aufgebrochene Seitenansicht des Lippen- und Wangenexpanders in einer der Ausführungsformen gemäß Fig. 15 und 16;
- Fig. 18: der Lippen- und Wangenexpander gemäß Fig. 17, jedoch in einer anderen Stellung;
- Fig. 19: und 20 eine Darstellung des Herstellungsverfahrens für einen erfindungsgemäßen Lippen- und Wangenexpanders;
- Fig. 21: eine teilweise aufgeschnittene Ansicht eines modifizier- ten Folienkörpers für einen erfindungsgemäßen Kofferdam, vor dem Einsetzen von Spannelementen;
- Fig. 22: zeigt eine modifizierte Ausführungsform eines erfin- dungsgemäßen Kofferdams; und
- Fig. 23: zeigt eine vergrößerte Darstellung eines Details aus Fig. 22.

Die Erfindung wird durch die Ansprüche definiert.

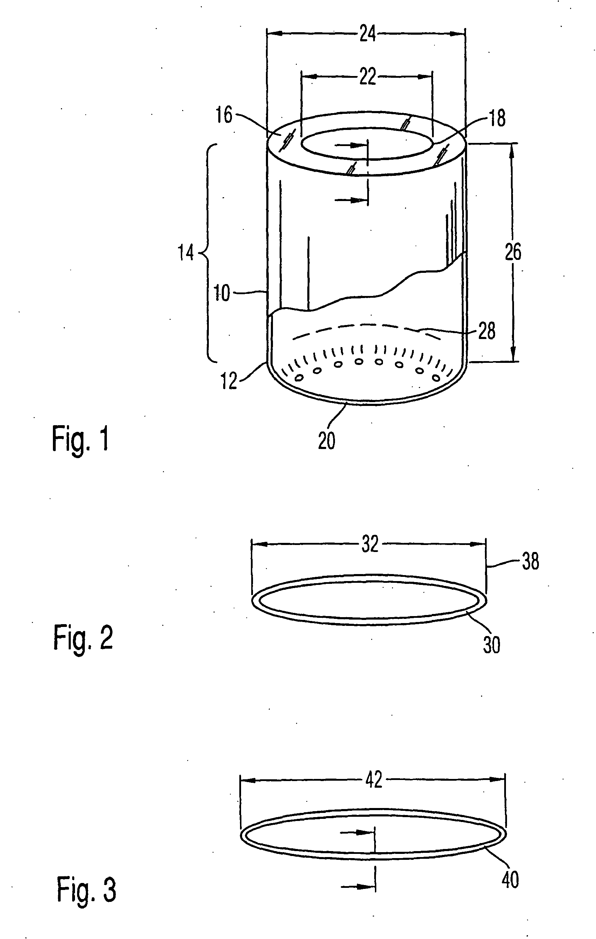

Aus Fig. 1 ist eine vorbereitete, einen Folienkörper 10 bildende Folie für die Erstellung eines erfindungsgemäßen Abdeck- und Abhalteelements 12 ersichtlich. Die Folie besteht in dem dargestellten Ausführungsbeispiel aus Talkum-freiem Latex und weist in der dargestellten Ausführungsform einen hülsenförmigen Abschnitt 14 auf. Eine vordere Stirnseite 16 ist mit einer Öffnung 18 versehen, und an einer rückwärtigen Stirnseite 20 befinden sich Markierungen, die entweder durch Farbauftrag oder durch Vorstanzen erzeugt sein können.

In dem dargestellten Ausführungsbeispiel ist die Öffnung 18, aber auch den Querschnitt des hülsenförmigen Abschnitts 14 kreisförmig. Der Durchmesser 22 der Öffnung beträgt 3 cm, während der Durchmesser 24 des hülsenförmigen Abschnitts 8 cm beträgt. Die Länge 26 des hülsenförmigen Abschnitts 14 beträgt in dem dargestellten Ausführungsbeispiel 6 cm, und es versteht sich, dass sämtliche Maße in weiten Bereichen an die Erfordernisse anpassbar sind.

Wie aus Fig. 1 schematisch ersichtlich ist, können bei Bedarf auch Perforationen 28 im rückwärtigen Bereich des hülsenförmigen Abschnitts 14 vorgesehen sein, um das Aufschneiden des Folienkörpers 10 an der betreffenden Stelle zu erleichtern. Auch wenn in Fig. 1 der Folienkörper 10 praktisch als eine Art Zylinder dargestellt ist, versteht es sich, dass sie in der Praxis biegeschlaff ist und lediglich durch die aus Fig. 2 und 3 ersichtlichen Spannelemente vorgespannt gehalten wird.

Aus Fig. 2 ist ein intraorales Spannelement 30 ersichtlich. Es weist einen Durchmesser 32 von 9 cm auf. Sein Querschnitt kann von der Kreisform abweichen, wie es im rechten Bereich von Fig. 2 dargestellt ist. Das Spannelement 30 weist einen Reibbereich 34 auf, der sich mindestens auch radial nach außen erstreckt und dazu dient, die Reibung gegenüber dem hülsenförmigen Abschnitt 14 zu erhöhen. Durch diese Maßnahme bleibt der erwünschte Abschnitt des Folienköpers 10 besser im Vestibulum. Es versteht sich, dass anstelledessen auch ein vollständig rauher Spannring eingesetzt werden kann; bevorzugt ist der Querschnittsdurchmesser 38 des intraoralen Spannelements 30 etwas kleiner als derjenige des extraoralen Spannelements 40, das in Fig. 3 dargestellt ist, und beträgt etwa 3 mm.

Demgegenüber kann das Spannelement 40 aber dünner ausgebildet sein. Das extraorale Spannelement 40 weist einen Durchmesser 42 von etwa 10 cm auf und sein Querschnittsdurchmesser beträgt etwa 2 mm. Es versteht sich, dass auch hier die Abmessungen in weiten Bereichen an die Erfordernisse anpassbar sind.

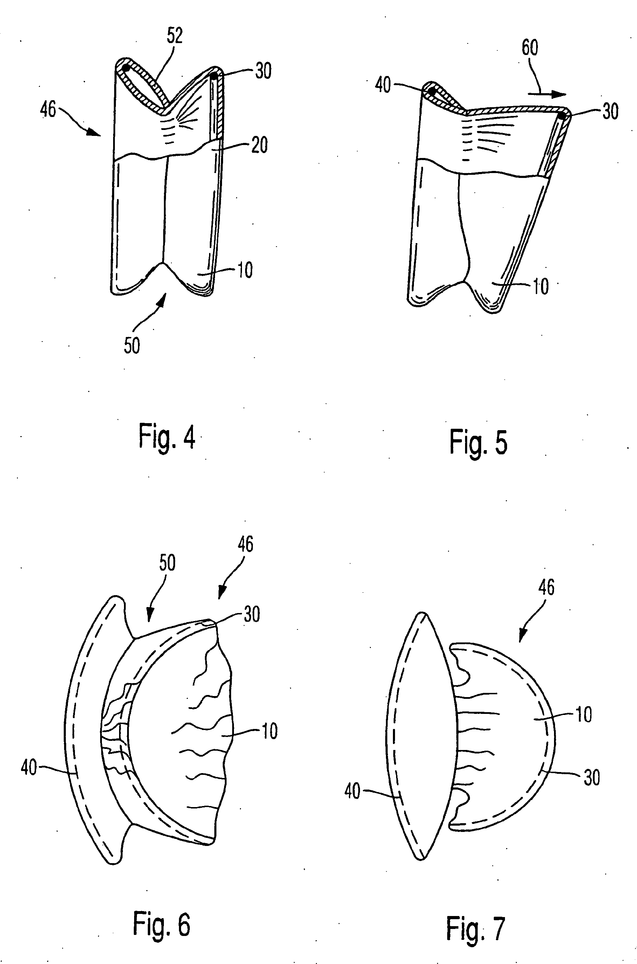

Aus Fig. 4 ist ersichtlich, wie ein erfindungsgemäßer Kofferdam 46 aufgebaut sein kann. Der Folienkörper 10 verläuft über dem intraoralen Spannelement 30 dergestalt, dass das intraorale Spannelement 30 die geschlossenen Stirnseite 20 begrenzt. Da der Durchmesser des intraoralen Spannelements 30 größer als der ungespannte Durchmesser des hülsenförmigen Abschnitts 14 ist, wird die Folie 10 dort aufgespannt.

Anschließend an das intraorale Spannelement 30 verläuft die Folie 10 radial einwärts. Dort ist insofern ein Einschnürbereich 50 gebildet.

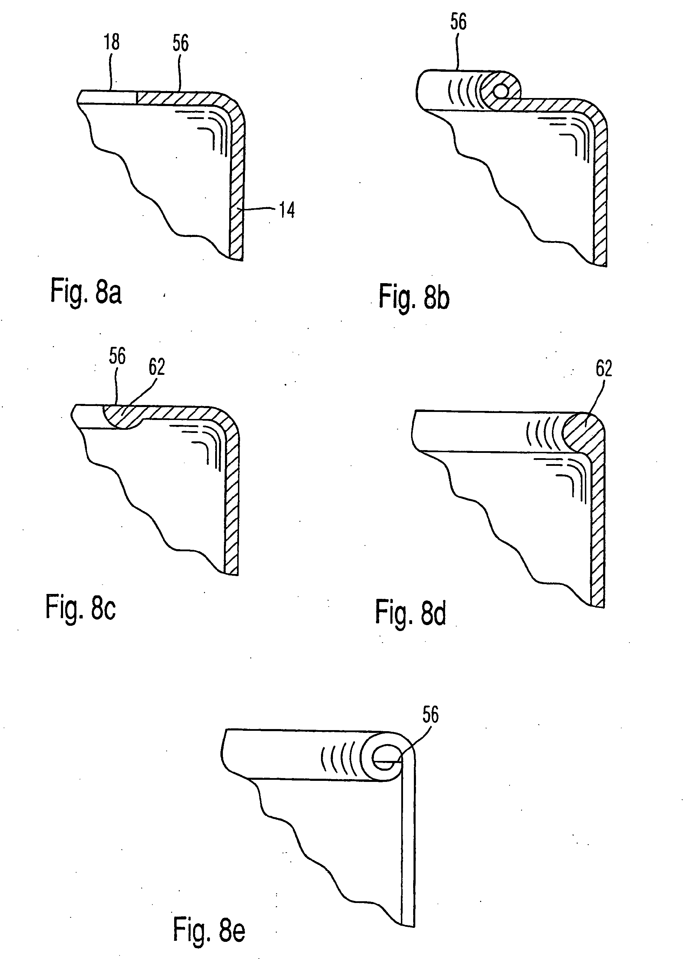

Vom Einschnürbereich 50 verläuft die Folie 10 ringförmig weiter zum extraoralen Spannelement 40 hin. Dieses durchtritt sie von innen und ist dort nach außen umgeschlagen. Das extraorale Spannelement 40 spannt den Folienkörper 10 insofern ebenfalls auf, so dass sie auch dort unter Spannung steht. Der Folienkörper 10 weist dort einen Umschlagbereich 52 auf, der sich in den Einschnürbereich 50 erstreckt. Nachdem der Folienkörper 10 im Umschlagbereich 52 doppelwandig ist, zieht sie sich dort radial noch stärker zusammen. Sie endet dort in einem Rand 56, der der Öffnung 18 gemäß Fig. 1 entspricht. Der Rand 56 kann in beliebiger geeigneter Weise ausgebildet sein, wie es aus den Figuren 8A bis 8E ersichtlich ist.

Bei einer Materialverstärkung des Rands 56 ist dort die radiale Zugwirkung noch größer. Hierdurch neigt der Umschlagbereich 52 dazu, sich selbsttätig in die aus Fig. 4 ersichtlich symmetrische Stellung zu ziehen. Bei der aus Fig. 5 ersichtlichen einseitigen Belastung, beispielweise in Richtung des Pfeils 60, verschiebt sich jedoch ein Teil des Folienkörpers 10 über das extraorale Spannelement 40 so, dass der Umschlagbereich 52 dort kleiner wird. Der Umschlagbereich 52 bildet insofern eine Materialreserve, und zwar sowohl, wenn - wie aus Fig. 5 ersichtlich - eine axiale Zugkraft einseitig auf den Folienkörper ausgeübt wird, als auch, wenn eine entsprechende radiale Zugkraft auf den Folienkörper ausgeübt wird, wie es beispielsweise durch Lippen eines Patienten geschehen kann.

Durch die geringe Reibung zwischen dem extraoralen Spannelement 40 und der dort anliegenden Seite des Folienkörpers 10 zieht sich der Folienkörper selbsttätig in die aus Fig. 4 ersichtliche Stellung zurück, wenn die Zugkraft entfällt.

Es versteht sich, dass beliebige geeignete Maßnahmen ergriffen sein können, um die Reibung zwischen dem extraoralen Spannelement und der betreffenden anliegenden Seite des Folienkörpers 10, also der Außenseite des Folienkörpers, zu reduzieren. Beispielsweise kann auch eine Gleitschicht außen auf den Folienkörper 10 aufgebracht sein, oder es kann Talkum verwendet werden.

Aus Fig. 6 ist ersichtlicht, wie ein Kofferdam 46 im Mund eines Patienten zu liegen kommt. Der extraorale Spannring 40 ist entsprechend der bogenförmigen Mundform gebogen. Noch wesentlich stärker ist der intraorale Spannring 30 entsprechend der Ausbildung des Vestibulums gebogen, und auch der Einschnürbereich 50 folgt dieser Form. Die Stirnseite 20 ist durch die bestehende Biegung je nicht mehr eben, sondern über die Zähne des Patienten gespannt. Dort entsteht die stärkste Spannung in dem Folienkörper, so dass dort in geringstem Umfang mit Blasenbildung zu rechnen ist.

Aus Fig. 7 ist die Lage des Kofferdams im Mund in Seitenansicht ersichtlich. Das intraorale Spannelement 30 ist gegenüber der Darstellung in Draufsicht gemäß Fig. 6 in Gegenrichtung gebogen.

Aus den Fig. 8A bis 8E sind verschiedenen Ausgestaltungsmöglichkeiten des Rands 56 ersichtlich. Fig. 8A zeigt einen glatten Rand, an dem sich die Öffnung 18 anschließt. Demgegenüber zeigt Fig. 8B einen gerollten Rand 56 und Fig. 8C eine Verdickung 62, die den Rand 56 bildet. In beiden Fällen liegt eine Materialstärkenerhöhung vor, die das Einziehen des Rands 56 in den Einschnürbereich 50 begünstigt. Aus Fig. 8D ist ebenfalls eine Verdickung 62 in einer modifizierten Form ersichtlich und Fig. 8e zeigt einen rollenden Rand 56, einen Rand also, bei dem ein aufgewickelter Rand vorgespannt vorliegt, der sich bei Zug elastisch abrollt und bei Freigabe wieder aufrollt.

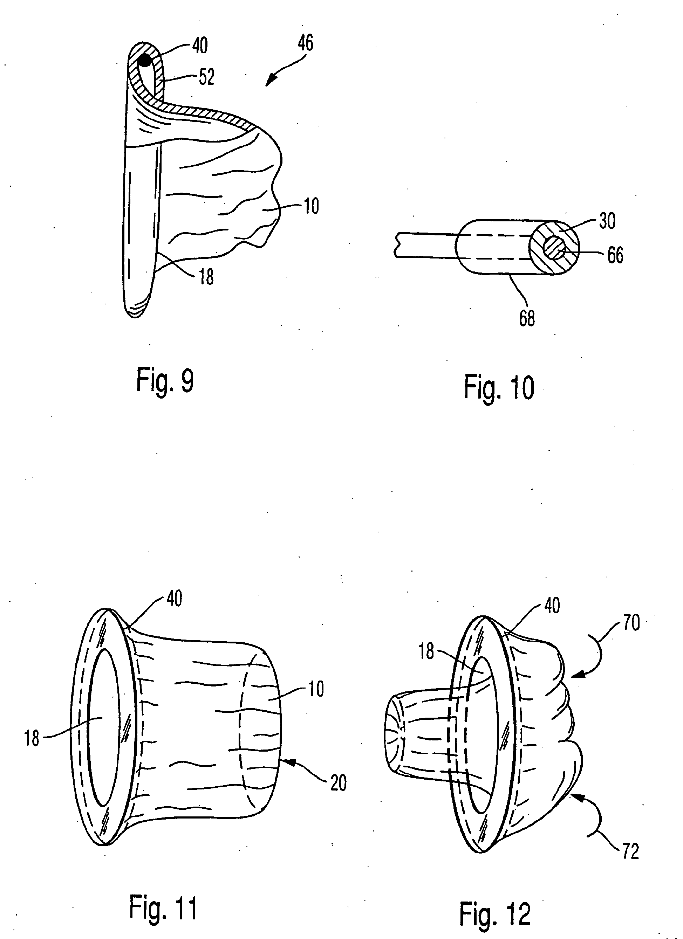

Eine modifizierte Ausgestaltung eines erfindungsgemäßen Kofferdams 46 ist aus Fig. 9 ersichtlich. Bei dieser Ausgestaltung ist lediglich ein extraorales Spannelement 40 vorgesehen, über das der Folienkörper 10 umgeschlagen ist und dort den Umschlagbereich 52 bildet. Der Folienkörper 10 ist beutelförmig durch die Öffnung 18 hindurchgesteckt. Auch bei dieser Lösung ergibt sich die erfindungsgemäße verschiebliche Lagerung zwischen Folienkörper und Spannelement.

Aus Fig. 10 ist ersichtlich, in welcher Weise das intraorale Spannelement geformt sein kann. Das intraorale Spannelement 30 ist dort geschnitten dargestellt, wobei das Umhüllungsmaterial teilweise entfernt ist. Das intraorale Spannelement 30 weist in diesem Ausführungsbeispiel einen metallischen Kern 66 auf, und die Umhüllung 68 besteht aus einem elastischen Material, das zudem vergleichsweise rauh sein kann.

Aus den Fig. 11 bis 14 ist ein mögliches Herstellverfahren für einen erfindungsgemäßen Kofferdam 46 ersichtlich. Gemäß Fig. 11 ist zunächst das extraorale Spannelement 40 in den beutelförmigen Folienkörper 10 eingesteckt, durch die elastisch ausweitbare Öffnung 18 hindurch. Gemäß Fig. 12 wird dann entlang den Pfeilen 70 und 72 die Stirnseite 20 des beutelförmigen Folienkörpers 10 durch die Öffnung 18 hindurchgesteckt, so dass zugleich auch ein Durchstecken durch das extraorale Spannelement 40 erfolgt.

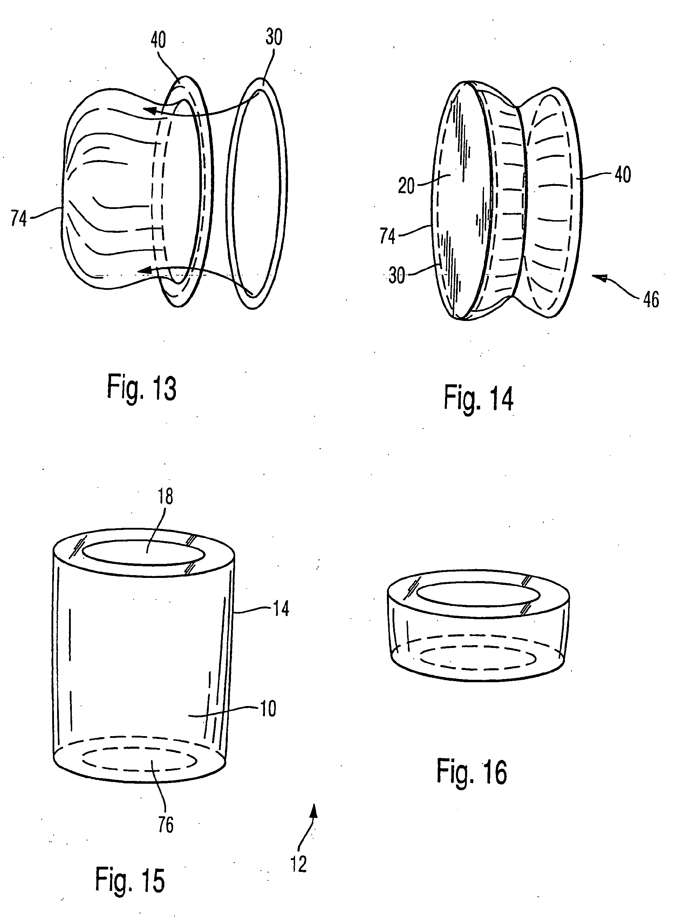

Gemäß Fig. 13 wird dann das intraorale Spannelement 30 durch das extraorale Spannelement 40, die Öffnung 18 in den nunmehr in entgegengesetzter Richtung ausgebildeten Beutel 74 eingesteckt, so dass sich aus Fig. 14 ersichtliche Form des intraoralen Spannelements 30 ergibt. Wie ersichtlich ist, spannt dieser nunmehr die Stirnseite 20 des Beutels 74 auf.

Eine andere Ausgestaltung eines erfindungsgemäßen Abdeck- und Abhalteelements 10 ist aus den Fig. 15 und 16 ersichtlich. Dort ist zunächst der Folienkörper 10 dargestellt, die zusätzlich zur Öffnung 18 eine Öffnung 76 aufweist, die dieser gegenüber liegt. Auch hier ist ein hülsenförmiger Abschnitt 14 ausgebildet und der Folienkörper 10 liegt in im Wesentlichen zylindrischer Form vor, wobei gemäß Fig. 15 eine größere Länge und gemäß Fig. 16 eine geringere Länge möglich ist.

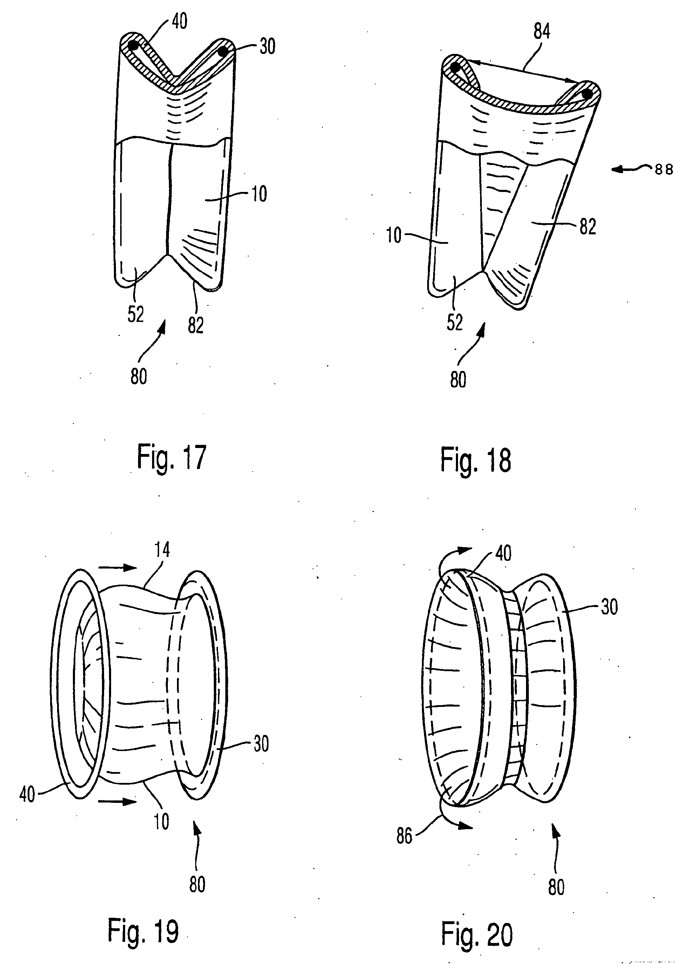

Aus Fig. 17 und 18 ist je ein Lippen- und Wangenexpander 80 in Funktion ersichtlich. Wie aus Fig. 17 ersichtlich ist, erstreckt sich der Folienkörper 10 je von innen nach außen umgeschlagen sowohl über das intraorale Spannelement 30 als auch über das extraorale Spannelement 40 hinweg nach außen. Insofern sind zwei Umschlagsbereiche 52 und 82 ausgebildet.

Aus Fig. 18 ist ersichtlich, wie sich der Lippen- und Wangenexpander 80 verformt, wenn er axiale Zugkräfte entsprechend den Pfeilen 84 einseitig ausgeübt werden. Aus den Umschlagbereichen 52 und 82 fließt der Folienkörper 10 unter Ausnutzung der dort vorgesehenen Materialreserve nach innen, so dass eine Anpassung an die Mundform ohne weiteres gegeben ist. Eine zweite, der ersten Öffnung 18 gegenüberliegende Öffnung 88 ist aus Fig. 18 ebenfalls ersichtlich.

In den Fig. 19 und 20 ist die Herstellung des Lippen- und Wangenexpanders 80 schematisch dargestellt. An dem intraoralen Spannelement 30 wird der Folienkörper 10 von innen nach außen umgeschlagen. Das extraorale Spannelement 40 wird dann auf den hülsenförmigen Abschnitt 14 aufgeschoben und gemäß Fig. 20 wird der Folienkörper dort ebenfalls von innen nach außen entsprechend den Pfeilen 86 umgeschlagen.

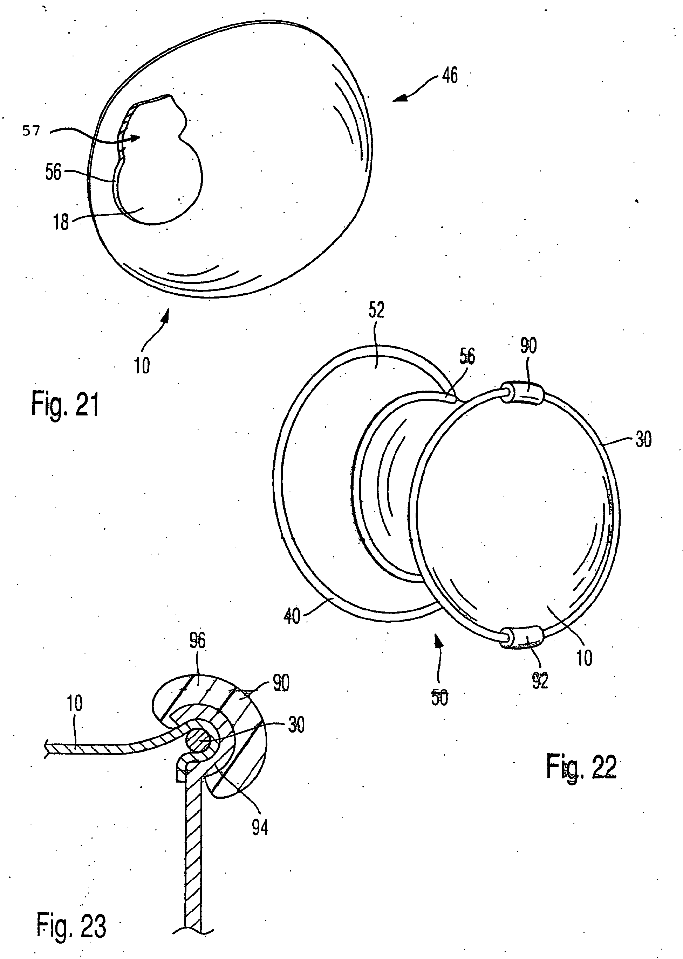

Eine modifizierte Ausgestaltung eines Folienkörpers 10 für die Bildung eines Kofferdams 46 ist aus Fig. 21 ersichtlich. Im in Fig. 21 dargestellten biegeschlaffen Zustand ist der Folienkörper 10 im Wesentlichen kugelförmig, wobei die Öffnung 18 in an sich bekannter Weise mit einem verstärkten Rand 56 ausgebildet ist, der den Umschlagbereich 52 des Folienkörpers abschließt und bei 57 aufgebrochen dargestellt ist. Auch bei dieser Lösung lässt sich das erfindungsgemäße verschiebliche Lagern des extraoralen Spannelements 40 gegenüber dem Folienkörper realisieren.

Aus Fig. 22 ist eine weiter modifizierte Ausführungsform eines erfindungsgemäßen Abdeck- und Abhalteelements ersichtlich. Bei dieser Ausführungsform, die hier als Kofferdam ausgebildet ist, aber auch als Lippen- und Wangenexpander verwendet werden kann, erstreckt sich der Folienkörper 10 in üblicher Weise von innen nach außen über das extraorale Spannelement 40 und außen über das intraorale Spannelement 30. Im Einschnürbereich 50 des Kofferdams ist ein Rollrand 56 vorgesehen.

Die Besonderheit der in Fig. 22 dargestellten Ausführungsform liegt in der Anbringung von zusätzlichen Klemm- und Dämpfkörpern 90 und 92 auf dem intraoralen Spannelement 30. Die Klemm- und Dämpfkörper 90, die in Fig. 23 im Schnitt und vergrößert dargestellt sind, haben im Wesentlichen drei Funktionen:
Zum einen wird durch die Anbringung auf dem Spannelement 30 das Hindurchstrecken des intraoralen Spannelements 30 durch Öffnung 18 bei der Erstellung des Kofferdams erleichtert. Der Klemm- und Dämpfkörper 90 bzw. der Klemm- und Dämpfkörper 92 übergreifen hierzu die Folie, während sie bereits auf dem Spannelement 30 aufliegt.

Darüberhinaus wird an dieser Stelle der von dem Spannelement 30 auf das Vestibulum ausgeübte Druck abgemildert und vergleichmäßigt. Hierzu ist der Klemm- und Dämpfkörper 90 und 92 je mindestens außen aus einem ausgesprochen weichen Kunststoff ausgebildet. Der ausgeübte Druck wird auf diese Weise reduziert.

Ferner dient der Klemm- und Dämpfkörper 90 und 92 der Klemmung des Folienkörpers auf dem Spannelement 30, so dass das intraorale Spannelement 30 hinsichtlich des Folienkörpers fixiert ist.

Aus Fig. 23 ist ersichtlich, in welcher Weise ein Klemm- und Dämpfkörper 90 aufgebaut sein kann. Der Körper 90 weist einen Klemmkörper 94 auf, der sich über etwas mehr als einen Halbkreis über das Spannelement 30 erstreckt und den Folienkörper 10 dort festklemmt. Er ist außen umgeben von einem Dämpfkörper 96. Der Dämpfkörper kann beispielsweise aus Schaumstoff bestehen, bevorzugt aus einem geschlossenporigen Schaumstoff, oder aus einem anderen sehr weich elastischen und mundverträglichen Kunststoff.

## Patentansprüche

1. Abdeck- und Abhalteelement für die störungsfreie Vornahme dentaler Bearbeitungen im Mundraum, insbesondere an Zähnen eines Patienten,
mit einem insbesondere dehnbaren Folienkörper (10) für das Abdecken mindestens eines Teils des Mundraums des Patienten,
mit wenigstens einem elastischen intraoralen und wenigstens einem elastischen extraoralen Spannelement,
wobei der Folienkörper (10)
wenigstens eine Öffnung (18) aufweist,
über das extraorale Spannelement (40) und/oder über das intraorale Spannelement (30) umgeschlagen,
gegenüber den Spannelementen (30, 40) verschieblich ist und
der Folienkörper (10) einen Einschnürbereich (50) zwischen den Spannelementen aufweist, in dem der die Öffnung (18) umgebende freie Rand des umgeschlagenen Endes des Folienkörpers (10) die Folie radial einschnürt.

2. Abdeck- und Abhalteelement nach einem der vorhergehenden Ansprüche, **dadurch gekennzeichnet, dass** der die Öffnung (18) umgebende Rand des Folienkörpers (10) die gleiche Wandstärke aufweist wie der Folienkörper, der nach aussen umgeschlagen, gerollt, verdickt oder in Form eines Kragens ausgebildet ist.

3. Abdeck- und Abhalteelement nach einem der vorhergehenden Ansprüche, **dadurch gekennzeichnet, dass** der Folienkörper (10) unter Bildung eines Kofferdams (46) rückwärtig geschlossen ist und das intraorale Spannelement (30) radial von aussen umgibt.

4. Abdeck- und Abhalteelement nach einem der vorhergehenden Ansprüche, **dadurch gekennzeichnet, dass** der Folienkörper (10) durch die Spannelemente (30, 40) ringförmig aufgespannt ist und der freie Rand des umgeschlagenen Endes des Folienkörpers (10) zwischen den Spannelementen (30,40) zu liegen kommt.

5. Abdeck- und Abhalteelement nach Anspruch 5, **dadurch gekennzeichnet, dass** der Folienkörper (10) an dem extraoralen Spannelement (40) von innen nach außen umgeschlagen ist und dass der umgeschlagene Teil des Folienkörpers (10) den Folienkörper (10) in dem Einschnürbereich radial einwärts elastisch vorspannt.

6. Abdeck- und Abhalteelement nach Anspruch 5 oder 6, **dadurch gekennzeichnet, dass** die in einer parallel zur Mittellängsachse der Spannelemente (30, 40) erstreckende Länge des Einschnürbereiches (50) durch Verschieben der Folie (10) gegenüber einem Spannelement änderbar ist.

7. Abdeck- und Abhalteelement nach einem der Ansprüche 1 bis 6, **dadurch gekennzeichnet, dass** der Folienkörper (10) eine zweite, der Öffnung (18) gegenüberliegende Öffnung aufweist, das intraorale Spannelement (30) teilweise durchsetzt und über dieses unter elastischer Aufweitung der zweiten Öffnung (88) nach aussen umgeschlagen ist.

8. Abdeck- und Abhalteelement nach einem der Ansprüche 1 bis 8, **dadurch gekennzeichnet, dass** die Spannelemente (30, 40) ringförmig ausgebildet sind und das interorale Spannelement (30) einen kleineren Durchmesser aufweisen kann, als das extraorale Spannelement (40).

9. Abdeck- und Abhalteelement nach einem der vorhergehenden Ansprüche, **dadurch gekennzeichnet, dass** das intraorale Spannelement (30) einen um 2% bis 20%, insbesondere etwa 5% bis 10%, kleineren Durchmesser als das extraorale Spannelement (40) aufweist.

10. Abdeck- und Abhalteelement nach einem der vorhergehenden Ansprüche, **dadurch gekennzeichnet, dass** der Folienkörper (10) eine Wandstärke von 10 µm bis 2mm hat und/oder dass der Folienkörper (10) um das 1,5- bis 7-fache seiner Originalgrösse dehnbar ist.

11. Abdeck- und Abhalteelement nach einem der vorhergehenden Ansprüche, **dadurch gekennzeichnet, dass** die Spannelemente (30, 40) aus Federstahl, Kunststoff und/oder Glasfasern bestehen und insbesondere einen Querschnittsdurchmesser von 0,5 bis 5 mm aufweisen.

12. Abdeck- und Abhalteelement nach einem der vorhergehenden Ansprüche, **dadurch gekennzeichnet, dass** mindestens ein Spannelement (30, 40) mindestens teilweise mit einem elastischen Material umhüllt ist.

13. Abdeck- und Abhalteelement nach einem der vorhergehenden Ansprüche, **dadurch gekennzeichnet, dass** der Folienkörper (10) aus Latex, Polyurethan besteht.

14. Abdeck- und Abhalteelement nach einem der vorhergehenden Ansprüche, **dadurch gekennzeichnet, dass** der Folienkörper (10) vorgestanzte und/oder vormarkierte und/oder perforierte Bereiche aufweist.

15. Verfahren zur Herstellung eines Abdeck- und Abhalteelements (12) für das Abdecken und Abhalten von Lippen und Wangen von Zähnen eines Patienten, wobei ein im Wesentlichen kugel- oder hülsenförmiger Folienkörper (10) mit zwei einander gegenüberliegenden Öffnungen vorbereitet wird, sich je von innen nach aussen über ein intraorales Spannelement (30) und ein extraorales Spannelement (40), umgeschlagen wird, sodass die umgeschlagenen Abschnitte den Folienkörper (10) zwischen den Spannelementen radial einschnürt, und der Folienkörper (10) einen Einschnürbereich (50) zwischen den Spannelementen aufweist, in dem der die Öffnung (18) umgebende freie Rand des umgeschlagenen Endes des Folienkörpers (10) die Folie radial einschnürt.

16. Verfahren zur Anwendung eines Abdeck- und Abhalteelements (12) nach einem der Ansprüche 1 bis 13, **dadurch gekennzeichnet, dass** das Verfahren die Schritte des Aufbringens einer Zugkraft auf den Folienkörper (10), wie sie beim Einsetzen in den Mund des Patienten auf die Folie wirkt, sowie des mindestens einseitigen Verschiebens des Folienkörpers (10) gegenüber dem extraoralen Spannelement (40) und insbesondere des Verformens des Folienkörpers (10) aufweist.

## Claims

1. A cover and holdback element for permitting disturbance-free dental operations to be performed in a patients mouth, in particular on a patients teeth, comprising:
an in particular expandable film body (10) to cover at least a portion of the the mouth volume of the patient;
at least one elastic intra-oral and at least one elastic extra-oral tensioning element,
said film body (10)
comprising at least one opening (18),
being folded or turned over the extra-oral tensioning element and/or
over the intra-oral tensioning element (30),
being slidable or displaceable relative to the tensioning elements (30, 40), and
said film body (10) comprising a necking area (50) between the tensioning elements, where the free edge of the folded-over end of the film body (10) that surrounds the opening (18), radially constricts the film body.

2. The cover and holdback element as claimed in claim 1, wherein the edge of the film body (10) surrounding the opening (18) comprises the same wall thickness than the film body that is folded outwards, rolled, thickened or is formed as a collar or flange.

3. The cover and holdback element as claimed in one of the preceding claims, wherein the film body (10) is closed off on its back side so as to form a rubber dam (46) and surrounds the intra-oral tensioning element (30) radially from the outside.

4. The cover and holdback element as claimed in one of the preceding claims, wherein the film body (10) is stretched or spread out into an annular configuration by means of the tensioning elements (30, 40), and the free edge of the folded-over end of the film body (10) is disposed between the tensioning elements (30, 40).

5. The cover and holdback element as claimed in claim 4, wherein the film body (10) at the extra-oral tensioning element (40) is folded over from the inside outwards and the folded-over part of the film body (10) elastically biases the film body (10) in the necking area in the radially inward direction.

6. The cover and holdback element as claimed in claim 4 or 5, wherein the length of the necking area (50) that extends parallel to the central longitudinal axis of the tensioning elements (30, 40), may be varied by shifting or displacing the film (10) relative to a tensioning element.

7. The cover and holdback element as claimed in one of the claims 1 to 6, wherein the film body (10) comprises a second opening disposed opposite the opening (18), the film body (10) being partially passed through the intra-oral tensioning element (30) and being folded therearound so as to extend outwardly using an elastic expansion of the second opening (88).

8. The cover and holdback element as claimed in one of the claims 1 to 7, wherein the tensioning elements (30, 40) are annularly shaped and the intra-oral tensioning element (30) may have a smaller diameter than the extra-oral tensioning element (40).

9. The cover and holdback element as claimed in one of the preceding claims, wherein the intra-oral tensioning element (30) has a diameter that is 2% to 20%, in particular about 5% to 10% smaller than that of the extra-oral tensioning element (40).

10. The cover and holdback element as claimed in one of the preceding claims, wherein the film body (10) has a wall thickness of 10µm to 2mm and/or the film body (10) has an expansion capability to expand to 1,5 to 7 times its original size.

11. The cover and holdback element as claimed in one of the preceding claims, wherein the tensioning elements (30, 40) consist of spring steel, plastic and/or glass fibres, and in particular have a cross sectional diameter of 0,5 to 5mm.

12. The cover and holdback element as claimed in one of the preceding claims, wherein at least one of the tensioning elements (30, 40) is at least partially encased with an elastic material.

13. The cover and holdback element as claimed in one of the preceding claims, wherein the film body (10) is formed of a selected one of latex and polyurethane.

14. The cover and holdback element as claimed in one of the preceding claims, wherein the film body (10) comprises pre-stamped and/or pre-marked and/or perforated regions.

15. A process for fabricating a cover and holdback element (12) for covering and keeping away the lips and cheeks from the teeth of a patient, wherein a substantially ball-or sleeve-shaped film body (10) is prepared so as to comprise two openings opposite each other, said film body (10) being folded over both an intra-oral tensioning element (30) and an extra-oral tensioning dlement (40) from the inside outwards so that the folded-over portions radially constrict the film body (10) between the tensioning elements, and wherein the film body (10) comprises a necking or constriction area (50) between the tensioning elements, where the free edge of the folded-over end of the film body (10) that surrounds the opening (18), radially constricts the film.

16. The process for using a cover and holdback element (12) as claimed in one of the claims 1 to 13, wherein the process comprises the following steps: applying a tensile force to the film body (10) as it acts upon the film during insertion into the patients mouth, and at least single-sidedly displacing the film body (10) relative to the extra-oral tensioning element (40), and in particular deforming the film body (10).

## Revendications

1. Élément de couverture et de rétention pour la réalisation sans perturbations des travaux dentaires dans la cavité buccale, en particulier les dents d'un patient, avec un corps en feuille (10) en particulier extensible, pour couvrir au moins une partie de la cavité buccale du patient, avec au moins un élément de tension intraoral flexible et au moins un élément de tension extraoral flexible, où le corps en feuille (10) présente au moins une ouverture (18), retournée sur l'élément de tension extraoral (40) et/ou l'élément de tension intraoral (30), déplaçable par rapport aux éléments de tension (30, 40), et le corps en feuille (10) présente une zone de constriction (50) entre les éléments de tension dans laquelle le bord libre de l'extrémité retournée du corps en feuille (10) entourant l'ouverture (18) serre la feuille radialement.

2. Élément de couverture et de rétention selon l'une des revendications précédentes, **caractérisé en ce que** le bord entourant l'ouverture (18) du corps en feuille (10) présente la même épaisseur de paroi que le corps en feuille, qui, retourné vers l'extérieur, est formé roulé, épaissi ou en forme de collier.

3. Élément de couverture et de rétention selon l'une des revendications précédentes, **caractérisé en ce que** le corps en feuille (10) sous la formation d'une digue dentaire (46) est fermé vers arrière et entoure l'élément de tension intraoral (30) radialement de l'extérieur.

4. Élément de couverture et de rétention selon l'une des revendications précédentes, **caractérisé en ce que** le corps en feuille (10) est tendu en forme d'anneau par les éléments de tension (30, 40) et que le bord libre de l'extrémité retournée du corps en feuille (10) vient se situer entre les éléments de tension (30,40).

5. Élément de couverture et de rétention selon la revendication 5, **caractérisé en ce que** le corps en feuille (10) est retourné sur l'élément de tension extraoral (40) de l'intérieur vers l'extérieur et que la partie retournée du corps en feuille (10) attelle le corps en feuille (10) radialement vers l'intérieur élastiquement dans la zone de constriction.

6. Élément de couverture et de rétention selon l'une des revendications 5 ou 6, **caractérisé en ce que** la longueur de la zone de constriction (50) s'étendant parallèle à l'axe longitudinal moyen des éléments de tension (30,40) est modifiable par décalage de la feuille (10) par rapport à un élément de tension.

7. Élément de couverture et de rétention selon l'une des revendications 1 à 6, **caractérisé en ce que** le corps en feuille (10) présente une deuxième ouverture située en face de l'ouverture (18), traverse en partie l'élément de tension intraorale (30) et sous l'élargissement élastique de la deuxième ouverture (88) est retourné vers l'extérieur par celui-ci.

8. Élément de couverture et de rétention selon l'une des revendications 1 à 8, **caractérisé en ce que** les éléments de tension (30,40) sont configurés sous forme d'anneaux et l'élément de tension intraoral (30) peut présenter un plus petit diamètre, que l'élément de tension extraoral (40).

9. Élément de couverture et de rétention selon l'une des revendications précédentes, **caractérisé en ce que** l'élément de tension intraorale (30) présente un diamètre plus petit que l'élément de tension extraoral (40) par environ 2% à 20%, de préférence par environ 5% à 10%.

10. Élément de couverture et de rétention selon l'une des revendications précédentes, **caractérisé en ce que** le corps en feuille (10) a une épaisseur de paroi de 10 µm à 2mm et/ou que le corps en feuille (10) est extensible par environ 1,5 - à 7 fois sa dimension originale.

11. Élément de couverture et de rétention selon l'une des revendications précédentes, **caractérisé en ce que** les éléments de tension (30, 40) sont composés d'acier à ressorts, de la matière plastique et/ou des fibres de verre et présentent de préférence un diamètre de coupe transversale de 0,5 à 5 mm.

12. Élément de couverture et de rétention selon l'une des revendications précédentes, **caractérisé en ce qu'**au moins un élément de tension (30, 40) est enveloppé au moins en partie avec un matériel flexible.

13. Élément de couverture et de rétention selon l'une des revendications précédentes, **caractérisé en ce que** le corps en feuille (10) est composé de polyuréthane, de latex.

14. Élément de couverture et de rétention selon l'une des revendications précédentes, **caractérisé en ce que** des corps en feuille (10) présente des secteurs pré-poin-connés et/ou premarqués et/ou perforés.

15. Procédure de fabrication d'un élément de couverture et de rétention (12) pour couvrir et retenir les lèvres et les joues des dents d'un patient, où un corps en feuille (10) essentiellement de forme sphérique ou de gaine avec deux ouvertures l'un en face de l'autre est préparé, est retourné chacun de l'intérieur vers l'extérieur sur un élément de tension intraoral (30) et un élément de tension extraoral (40), de sorte que les sections retournés du corps en feuille (10) serrent le corps en feuille radialement entre les éléments de tension et le corps en feuille (10) présente une zone de constriction (50) entre les éléments de tension, dans laquelle le bord libre de l'extrémité retournée du corps en feuille (10) entourant l'ouverture (18) serre la feuille radialement.

16. Procédure d'utilisation d'un élément de couverture et de rétention (12) selon l'une des revendications 1 à 13, **caractérisée en ce que** la procédure présente les étapes de l'application d'une force de traction sur le corps en feuille comme elle agit sur la feuille lors de l'introduction dans la bouche du patient (10), ainsi que du glissement au moins unilatéral du corps en feuille (10) par rapport à l'élément de tension extraoral (40) et en particulier de la déformation du corps en feuille (10).
